# EUROPEAN PATENT APPLICATION

(11) **EP 1 223 436 A1**
(43) Date of publication of application: **17.07.2002**
(21) Application number: 01200141.8
(22) Date of filing: 16.01.2001
(51) Int. Cl.: G01V 5/02

(54) **Measurement of properties of a field for cultivation and determination of cultivation treatment parameters**

(71) Applicant: The Soil Company B.V., 9747 AT Groningen (NL)
(72) Inventor: Sanders, Johan Pieter Marinus, 9722 WL, Groningen (NL); de Meijer, Robert Johan, 9321 XS, Peize (NL)
(74) Representative: Prins, Adrianus Willem

(57) **Abstract**

For determining a property of a field for cultivation gamma radiation emitted by radionuclide or radionuclides in soil of that field is measured. At least one property determined from the measurement result is a property other than quantitative presence of one or more radionuclides in the field or in a portion thereof.. It is also described to determine and control cultivation treatment and yield parameters from the gamma ray measurement result. Furthermore, computer programs, apparatus, and data sets for use in the proposed methods are described. The invention allows to determine features of the field relevant for cultivation quickly and at low-cost.

## Description

### TECHNICAL FIELD

The present invention relates to soil analysis for growing a crop and is specifically suitable for site specific or precision cultivation in which cultivating activity is closely differentiated over an area in which crops are cultivated in accordance with differences between these areas.

### BACKGROUND ART

Starting several decades ago traditional farming is gradually entering the era of precision farming as a next important step in its development. Computers have become a common tool in the farm house and are today more and more applied to assist in the complex task of maximizing yields and optimizing the balance between input and yields and to reduce risks.

Satellite navigation systems (GPS) mounted on tractor cabs in conjunction with soil sensors on the cultivators and yield monitors on harvesting machines are used to collect position specific information on soil condition and yield and provide input to a computer data base. This information is then used to generate informative grid maps of the fields that provide the farmer with a powerful tool in decision making.

These developments require detailed spatial and temporal information on the actual soil condition in the top layer (usually 30-50 cm). A main problem is the lack of technologies that supply such information without invasive sampling, accurately, fast and at low-cost.

Soil conditions are dynamic and often change over the growing season depending on local rainfall, irrigation, application of fertilizers and other agro chemicals and the amount of sunshine. In fact, soil conditions typically vary over short distances and from day to day. Therefore, precision farming requires frequent and dynamic monitoring. Such monitoring requires a great number of samples which have to be analyzed off line for a great variety of parameters.

However, the costs of these methods make high sampling frequencies at a high spatial resolution unattractive as this entails analyzing large numbers of samples. On the other hand, reducing the number of samples by lowering sampling frequencies and/or lowering resolution makes detection of small scale variations impossible. Furthermore the current sampling methods are invasive and affect important physical properties of the soil such as the pore size distribution.

Although remote sensing has a great potential and experiences a rapid development, it allows measurement of only very limited (soil or plant) parameters. Also for optical measurements special precautions have to be taken to prevent background interference.

The difficulty of acquiring information regarding the properties of a field also makes it impossible to accurately determine and to precisely control parameters of cultivation treatment of a field, such as the need and depth of plowing, the need and composition of fertilization, the need and dosing of agro-chemicals in particular if the treatment is to be differentiated over different portions of a field.

### SUMMARY OF THE INVENTION

It is an object of the invention to provide a solution which allows rapid, precise and low-cost determination of properties of a field which are relevant for cultivation purposes, such as arable farming, horticulture, forestry and the cultivation of gardens, parks, playing fields and the like, or to determine and control rapidly, precisely and at low-cost parameters of cultivation treatment of the field while avoiding the extent of disturbance of soil properties caused by conventional sampling techniques.

According to the present invention, this object is achieved by providing a method according to claim 1 which allows rapid, reliable and low-cost determination of one or more properties of a field.

The invention further provides a method according to claim 16 which allows to determine parameters of cultivation treatment of the field rapidly, precisely and at low cost.

The invention further provides a method according to claim 18 which moreover allows to control and carry out the cultivation treatment.

Yet another embodiment of the invention is formed by a computer program product according to claim 22 which is specifically adapted for carrying out the determination according to claim 1 using a data processing system. Yet another embodiment of the invention is formed by a computer program product according to claim 23 which is specifically adapted for carrying out the determination according to claim 16 using a data processing system.

The invention can further be embodied in a system according to claim 24 which is specifically adapted for carrying out the method according to claim 1 and in a system according to claim 25 which is specifically adapted for carrying out the method according to claim 16.

Another embodiment of the invention is formed by a set of data according to claim 28. Such a set of data provides results of gamma radiation measurements taken from a field, which data can be used as input for the computer program according to claim 22 or 23 and allows a user to make use of the method according to claim 1, 16 or 18 without taking the measurements himself. The set of data can for instance be obtained from a measurement service company.

It has been found that gamma radiation (γ-radiation) emitted by a field does not only provide a measure for quantities in the top soil of the field of radionuclides having a long half-life time and/or of decay products thereof, but is also correlated very well to properties of the field which are of relevance for cultivating a crop on that field, to variation in cultivation treatment parameters for adjusting cultivation treatment to variations in field properties and to qualitative and quantitative yield data. Thus, variations between fields as well as variations between different field portions within a field can be accounted for on the basis of measurement results obtained by measuring gamma radiation. Since gamma radiation can be measured easily and quickly, measurement of gamma radiation provides a powerful tool for analyzing soil properties and also for devising cultivation treatment instructions closely adapted to differences between sites.

Particular embodiments of the invention are set forth in the dependent claims.

### BRIEF DESCRIPTION OF THE DRAWINGS

Fig. 1 is a schematic representation of an embodiment of a gamma radiation detector;
Fig. 2 is an example of an energy spectrum obtained by measurement of gamma radiation;
Fig. 3 is a schematic representation of a system according to the invention;
Fig. 4 is a flow chart of an example of a method according to the invention,
Figs. 5 and 6 are is a graphs in which U, Cs, Th en K are tetraedrically deployed in three dimensions,
Figs. 7-10 are graphs representing PLS1 Models of pH and Organic matter, predictions, and
Figs. 11-16 are graphs relating potato yield and quality to measured U, Cs, Th en K.

### DETAILED DESCRIPTION OF MODES OF CARRYING OUT THE INVENTION

An example of a detector suitable for use in the present invention is described in U.S. patent 5 744 804. This detector is also capable of determining a composition of radionuclides in soil from which the measured radiation was received.

Although for Th and U, the gamma radiation is not emitted by the nuclides but by nuclides further down the decay sequence, for convenience the terms Th and U activity are used in this specification for the decay products thereof as well.

In gamma radiation detectors, the radiation to be detected is for instance allowed to fall on a crystal, whereby a light flash can be generated. In case of gamma and x-ray radiation, such a photon causes such a light flash. These light flashes are applied to a photomultiplier which converts the light flashes into electrical pulses. The height of the electrical pulse is a measure for the energy of the photon incident on the crystal.

By counting the number of pulses for a period of, for instance, twenty seconds, and sorting them according to pulse height, an energy spectrum can be composed, i.e. the number of photons recorded per unit time as a function of their energy.

Such a spectrum will contain peaks or lines which are respectively caused at least substantially by the radionuclides mentioned. A peak or a set of peaks can then be ascribed to a nuclide. In addition, however, contributions from other physical phenomena are present in the spectrum, such as for instance the Compton effect.

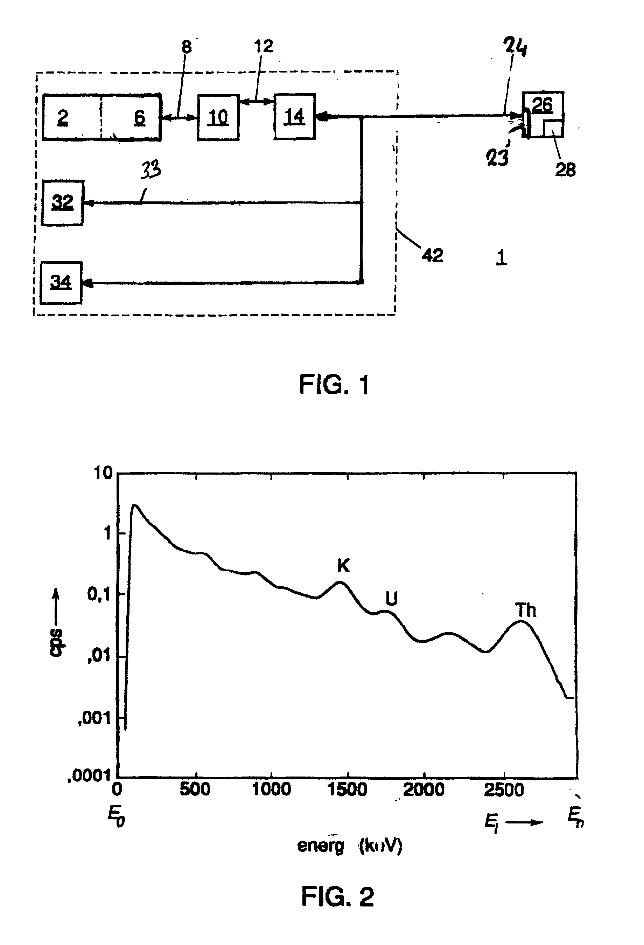

In Fig. 1 reference numeral 1 designates a system for detecting and interpreting gamma radiation emitted by radionuclides. The system comprises a scintillation detector 2, known per se: in this example a BGO (Bismuth Germanium Oxide) crystal. This crystal can generate a light flash when a photon of the radiation falls on the crystal. These light flashes are applied to a photomultiplier 6. The photomultiplier 6 converts the light pulses supplied by the scintillation detector into an electrical pulse of an amplitude which is a measure for the energy of the radiation received by the scintillation detector. These electrical pulses are applied via line 8 to a pulse height amplifier 10.

The pulse height amplifier generates on line 12 electrical signals containing information about the height of a pulse and hence the energy emitted by the photons. The number of photons detected per unit time (cps) is a measure for the intensity of the radiation, so that this information is also present in the electrical signal on line 12.

The electrical signal referred to is subsequently applied to an A/D converter 14 which digitizes the signal. In this example, the digitized signal is then transmitted via a bus 24 to an interface 23 of a computer 26.

From the digitized signal the computer unit 26, the computer 26 composes an energy spectrum as is shown, by way of example, in Fig. 2.

In this example the first computer unit 26 counts for a period of about one second the number of pulses having a magnitude between Eᵢ + 1 and Ei for I = 1,1, ... n with n = (Eₙ -E₀) / (Eᵢ+1 -Eᵢ). If n is large, an at least substantially continuous spectrum can be constructed, as is shown in Fig. 2. In Fig. 2 three peaks are marked which stem from K, U and Th. It is observed that in the proposed method, gamma ray spectra emitted by radionuclides such as (but not limited to) U, K, Th and Cs in the soil are measured and analyzed.

On the basis of spectra coming from, respectively, pure K, Cs, U and Th, which are stored in a memory 28 of the computer unit 26, the spectrum of Fig. 1 is de-convoluted by the computer 26 according to a first algorithm for obtaining the concentrations of the detected radionuclides in question. For this purpose the algorithm preferably utilizes the entire spectrum, i.e. all information that is available.

According to a particular embodiment of the system, the system further comprises additional sensors. In this example, two of such sensors 32,34 are shown. It is also possible, however, to expand the system with three or more sensors. The sensor 32 in this example is a temperature sensor-unit which outputs a digital signal via the bus 24 to the computer 26

The detector 34 is a motion detector which outputs a digital signal representing the rate of movement of the detector over the ground to the computer unit 26.

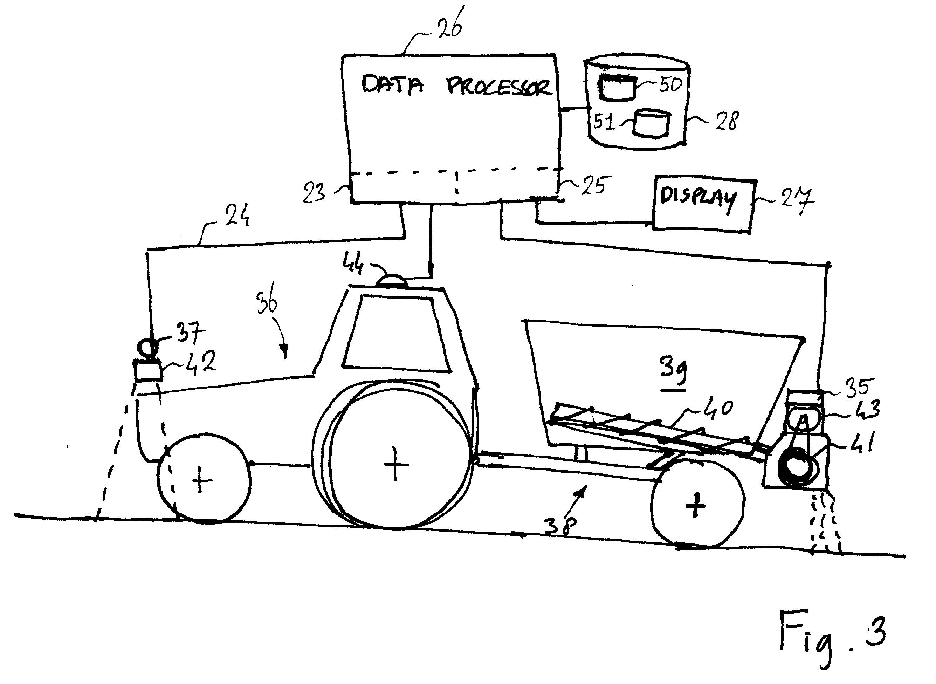

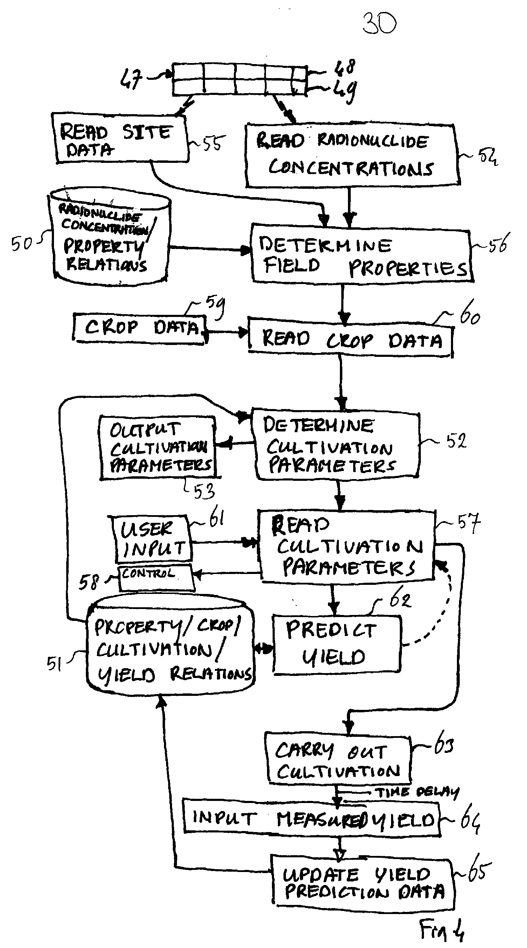

In Fig. 3 an example of a system according to the invention including a detector-unit 42 and the computer unit 26. Fig. 4 represents an example of a method which can be carried out using this system.

In the memory 28 a first database 50 (see Figs. 3 and 4) is stored containing data relating radio nuclide concentrations obtained from the gamma radiation measurement results to field properties including one or more properties other than quantitative presence of one or more radionuclides (which emit the measured gamma radiation) in the field from which the measurement have been taken. These field properties can for instance include: pH, N content, Ca content, organic matter content, pore size, pore size distribution, grain size, grain size distribution, water retaining properties, ion exchange properties and susceptibility to diseases or one or more of the properties. For the selection of properties to be determined, features of soil typologies and soil characteristics related to requirements regarding cultivation treatment parameters and yield or soil related pests and diseases are preferred. The actual selection of these parameters may vary between situations and crops.

The determined field properties other than quantitative presence of one or more gamma ray emitters can also include the amount of K extractable from the soil by plants. K is a radionuclide, but its presence in extractable form is different from the total presence of K in the soil. The gamma radiation caused by K depends on the total presence of K. To determine the presence of K in extractable form, a quantitative estimation of the presence of K and of at least one exogenous radionuclide, such as ¹³⁷Cs, can be made from the measurement result. The quantitative availability of K located on the outside of soil particles has been found to correlate very well with the total presence of K and the presence of the other radionuclide. In some cases it can already be of advantage if only a single property of a field is determined from the result of measuring gamma radiation.

The memory 28 further contains a computer program for determining properties of an agricultural field including instructions for reading data 49 representing results of measurement of gamma radiation - here in terms of radionuclide concentrations - and site data 48 defining the location where or the area from which the measurements have been taken, which data are part of a set of data 47 which has been inputted via the interface 23 (steps 54 and 55 in Fig. 4), and determination instructions for determining properties from the read data (step 56 in Fig. 4) by accessing the first database 50. The determined data can be outputted via the interface 25 to an interface for outputting data representing the determined property or properties in the form of a display 27.

Thus, soil properties which are relevant for cultivation purposes can be acquired quickly by moving the detector-unit 42 over a field. The data can also include data relating to properties of the field other than soil properties, such as the water content, which depends not only from the top soil, but also from other factors such as water supply, drainage and exposure to sun and wind. The properties for cultivation can relate to a field hitherto uncultivated or to a field already in cultivation on which cultivation is to be continued and the cultivation can be in fields of agriculture such as arable farming and horticulture of fruits or vegetables, to forestry or to cultivation for decorative or recreational purposes. The use of a detector as described allows to measure the gamma radiation remotely. The latter is particularly advantageous for taking a large number of measurements from a field quickly and without disturbing the soil.

Apart from determination of field properties, the system according to this example also includes features which allow to control cultivation treatment of the field. The cultivation treatment of which parameters are determined from measurements of gamma radiation preferably include cultivation treatments of which it is advantageous to adapt parameters to variations in properties of the field and particularly the soil. Examples of such cultivation treatments are plowing, watering, fertilizing, application of chalk, application of agro-chemicals such as insecticides, pesticides and herbicides, planting and sowing. In this example, the cultivation treatment is controlled on the basis of field properties as determined, but it is also conceivable to determine parameters of the cultivation treatment directly from the gathered gamma radiation data, preferably in terms of the radionuclide concentrations calculated therefrom.

For the purpose of determining parameters of cultivation treatment, the memory 28 contains a second database 51 (see Figs. 3 and 4) containing data relating field properties to cultivation treatment parameters. The computer program is also adapted for controlling cultivation treatment of an agricultural field. To this end, the computer program includes instructions for determining data for controlling cultivation treatment from the determined field properties (steps 52, and 53) and by accessing the second data base 51. The computer program further includes instructions for outputting determined data for controlling the cultivation treatment (step 58). The interface 25 also forms the interface for outputting data for controlling the cultivation treatment and is connected to a motor controller 35.

According to the present example, the detector-unit 42 is mounted on an agricultural treatment apparatus moveable over a field, here in the form of a tractor 36 carrying the detector units 42 on a laterally projecting beam 37 and a lime sprinkler trailer 38 including a hopper 39 for receiving lime to be distributed over a field. The hopper 39 is provided with a feeding screw 40 and behind the hopper 39 distributing screws 41 are provided which extend transversely to the longitudinal direction of the trailer 38. The screws 40, 41 are coupled to a motor 43 for driving the screws 40, 41. This motor 43 is controlled by the controller 35 in accordance with control signals obtained from the data processor 26. As is known as such these control signals depend not only on the measured gamma radiation, but also on the velocity of movement of the combination 36, 38. The velocity of the combination over the ground can for instance be derived by signals received from the motion sensor 34 or by the rate at which the position as determined by the GPS receiver changes.

The tractor 36 is also provided with a GPS receiver 44. This GPS receiver 44 is connected to the data processor 26 for feeding position data to the data processor 26.

While driving over a field, the detector-unit 42 measures gamma radiation on the fly and the GPS receiver 44 generates position data. Both the measured gamma radiation and the measured position are signaled to the data processor 26. The data processor 26 reads these data (steps 54 and 55) and in step 56 field properties are determined making use of the first database 50. The measurements can be averaged over successive positional windows and/or be averaged over a moving window to damp out statistical fluctuations in the gamma radiation signal. The length of the window in driving direction is preferably about 25-35 m. To further enhance the precision of the system, use can be made of a differential GPS receiver.

Since the measurement of gamma radiation from different portions of a field is combined with a passage over a field for the purpose of carrying out a cultivation treatment, a separate passage over the field for the sole purpose of taking gamma radiation measurements is not necessary.

Preferably, the tractor 36 carries two or more detector units 42 spaced apart in a direction transverse to the longitudinal direction of the tractor, so that detection can take place along two or more lines of a detection pattern during a single passage over a field. A suitable distance between the detectors would for instance be 5-15 m.

In this example, crop data 59 defining the crop to be cultivated or being cultivated have been inputted into the memory 28 previously and are read by the data processor (step 60). From the determined field properties and the crop data the cultivation parameters are determined in step 52. These cultivation parameters are outputted and stored in the memory 28, where these parameters are kept for future reference when the respective cultivation treatment is due, and may also be outputted via the interface 25 to be shown on the display 27 (step 53). Which cultivation parameters are actually to be applied depends on user input (step 61). The user input may for instance include constraints regarding available fertilizers, equipment and chemicals. The user input may also specify when particular cultivation treatments are to take place. When for instance application of lime to the field is postponed substantially, this can be taken into account by increasing the dosage. In the present example, the user input will however specify that lime application is to take place in-line with measurement of gamma radiation. Accordingly, the determined dosage parameters are directly converted into control signals 58 outputted to the controller 35 controlling the motor 43 driving the dispensing screws 40, 41. Other cultivation parameters regarding treatment which is to take place at a later moment are stored in the memory 28 in association with position data obtained from the GPS receiver 44. It is observed that communication between the data processor and the detector unit 42, the GPS receiver and the controller 35 can be wired or wireless. It is also possible that acquired data are first pre-processed and stored in mobile computer and then transferred to a main data processing system for final processing and archiving and that cultivation treatment data are transferred from the main data processor to a mobile data processor for controlling the cultivation treatment.

From the cultivation parameters and the field properties quantitative and qualitative features of the yield are predicted in step 62. An important example of such a qualitative yield parameter is the phosphate content of starch. This step again involves accessing the second database 51. If this step is carried out prior to selecting a crop for a field, the process can also be used to determine which crop can be expected to provide the best yield. If, furthermore, meteorological assumptions are varied the sensitivity of the crops to extreme weather conditions in the specific field can also be assessed. In this example, the yield prediction is based on previously determined field properties. It is also possible to determine yield parameters directly from the gamma radiation measurement results or from the estimated amounts of radionuclides in the soil.

According to the present example, the proposed method is self-learning in that after a cultivation season has passed and a crop has been cultivated (step 63) - which involves a certain time delay -, the actual yield is measured and inputted (step 64) and the actual yield data are supplied to the database for update of these data (step 65). The actual yield data can be used to improve predictions relating to the same field and predictions relating to other fields. Furthermore, data of actual yield used to improve the predictions of future yields preferably relate to the same crop, but may also relate to a different crop. This allows to improve the rate at which predictability can be improved on the basis of actual yield data.

Another instrument for improving yield prediction is the incorporation of existing crop growth models which are usually based on yields obtained from other fields.

Preferably, measurements are taken from a number of portions of a field. This allows to acquire information about differences in the field properties of different portions of the field and/or to differentiate the cultivation treatment between different portions of the field in accordance with differences in the properties of these portions. However, it is also possible to perform a rapid on the fly soil typology of a field as a whole, for instance discriminating more generally between different types of soils.

It can be practical if the gamma radiation measurements are taken by a service company so that the farmer need not be concerned with the operation and maintenance of the detector-unit 42. Furthermore, if taking the measurements can not be combined with cultivation treatment, the use of special means of transportation such as a helicopter or an airplane to move the detector unit over the field can make it attractive to have the measurements taken by a specialized party. The measurement results can then be provided by the specialized party in the form of a set of data including sets of positional data representing positions on or portions of an agricultural field and sets of radiation data each representing a measurement result of measuring gamma radiation, each of the measurement results being associated to one of the sets of positional data. For making accurate determinations of field properties and/or cultivation treatment parameters, it is advantageous if each of the measurement results includes an intensity and energy-distribution spectrum of gamma radiation emitted by the radionuclide in the respective portion of the field or measured in the respective position in the field.

For determining several properties, and accordingly for determining several cultivation treatment parameters, it is advantageous if several measurements are taken from the same portion of the field at different moments in time. This allows for instance to assess the extent to which substances are washed out of a field after a rainfall or the time of recovery to normal humidity levels after a rainfall. Taking several measurements over a period of time also allows to monitor changes in field properties and to adapt cultivation treatment parameters accordingly. For instance, if the pH values decreases while maintenance at the same level is desired, this forms an indication that the dosage of lime needs to be increased.

To accurately determine field properties and/or cultivation treatment parameters, it can also be advantageous to combine the measurement of gamma radiation with other, preferably also in-situ and remote measurements, such as measurements of an optical property, such as color, color intensity, tint or texture pattern and or reflection of electromagnetic waves such as radar, and to make the determination of the property to be determined in accordance with a result from the measurement of the result of the other remote measurement as well.

Also in-situ measurement of a mechanical soil property, such as shear resistance or break-up resistance or resistance to intrusion, and making the determination in accordance with a result from the measurement of that mechanical property can further improve the accuracy of determination of field properties from gamma radiation measurement data.

For calibration of the determination of field properties from gamma radiation measurements and, optionally, other measurements, it is advantageous to also take one or more samples from the portion of the field, to analyze the sample or samples and to making the determination of field properties in accordance with a result from the analysis of the sample or samples. Since taking samples is substantially more cumbersome than taking remote measurements, the number of samples taken from the field is preferably smaller than the number of measurements of gamma radiation taken from the field.

The optimization of cultivation treatment based on gamma radiation measurements can be advantageous in the cultivation of virtually any crop. Examples being sugar beet, potato, wheat, corn, grass, rice, cotton, soy, a fruit such as grapes, flowers. Special applications of the proposed method are maintenance of gardens, parks and golf courses, sport fields.

### THEORETICAL CONSIDERATIONS AND EXPERIMENTAL RESULTS

Detectors for detecting gamma radiation are known as such and are employed inter alia for the exploration and exploitation of oil and gas, detection of exogenous contaminants (e.g. fallout ¹³⁷Cs) and radioactive waste, surveys to analyze air, water and ground contaminants and occurrence of nuclides in the environment, wood, livestock and foodstuff. It has further been demonstrated that terrestrial gamma radiation can used for determination of radionuclide compositions of sediments and submarine sediments to establish their mineral composition to analyze their age and origin and to monitor geological processes like erosion, deposition, leeching and redistribution and the like (R.J. de Meijer, Heavy minerals: from 'Edelstein' to Einstein, Journal of Geochemical Exploration, Vol./issue 62/1 3, pp. 81-103, 1998; R.L. Koomans, Sand in Motion, PhD thesis Rijksuniversiteit Groningen, 2000). In this document it is also described how ⁴⁰K content measurement can be used to asses particle sizes in marine sediments.

Gamma ray measurement of ¹³⁷Cs is known to be suitable for use in the assessment of erosion rates, rates and patterns of soil redistribution including erosion and deposition, because of high affinity to fine soil particles and relative long half-life, and its world-wide distribution. These studies analyze compositions and spatial profiles of radionuclides and changes herein in time to analyze kinetics of erosion or deposition processes.

The proposed method uses a gamma ray detector to analyse gamma radiation from radionuclides occurring in soil. These data are used as input in for instance predictive models, decision support systems and precision farming systems.

It has been found that the data obtained by analysis of gamma radiation from radionuclides occurring in agricultural soil correlate well with parameters characterizing the soil conditions, with requirements regarding cultivation treatment parameters and with the qualitative and quantitative yield parameters of crops cultivated in the soil.

A tentative explanation for the correlation between, on the one hand, gamma radiation measurement results and, on the other hand, field properties, cultivation treatment requirements and yield parameters is that the parameters relate via the mineral composition, the grain size and the porosity of the soil. Also, some radionuclides like Cs and K tend to accumulate at the surface of grains and the amounts of these radionuclides in the top soil is therefore related to the pH and electrolytic properties including ion-exchange properties.

A system for determining a composition of a mineral containing material by detecting gamma radiation emitted by radionuclides in the material is described in the above-mentioned U.S. patent 5,744,804. One embodiment of the teaching of that document is the MEDUSA system (*M*ulti-*E*lement *D*etector for *U*nderwater *S*ediment *A*ctivity) which has been used for measuring radioactivity levels on the seafloor (R.L. Koopmans, Sand in Motion, PhD thesis Rijksuniversiteit Groningen, 2000, pages 39-77). The Detector used was a gamma ray detector mounted in an aluminium torpedo shaped casing. The system allows to integrate data from multiple sensors into high-resolution composition maps of the underwater environment and the derivation of sediment information from these sensors output at a towing speed of 2 m/s.

The gamma ray emitters of interest are primarily those with a long life (half-life time >10⁹ years), such as ⁴⁰K, ²³²Th, ²³⁵U, ²³⁸U and their decay products. During formation of these minerals, radionuclides were incorporated and the concentration of specific radionuclides depend strongly on the mineral type and site. Apart form naturally occurring radionuclides, also exogenous radionuclides like Cs that were introduced in nature by man as a result of fall out from nuclear bomb testing (1950-1963) and the Chernobyl reactor accident (1986), can be used for such analysis.

The radionuclides typically decay releasing inter alia alpha, beta, gamma and X-ray radiation. The spectrum measured can be used to analyse the type of radionuclide and the relative amount.

Applying the MEDUSA device for sediment analysis in coastal sediments it has been demonstrated that there is a relation between the ⁴⁰K concentration and the medium grain size of sediments. A similar observation was made with Cs. Moreover, it has been demonstrated that from the ⁴⁰K activity and given a proper calibration, the average grain size can be calculated according to equation C(⁴⁰K) = a+ b/d₅₀. Furthermore it was demonstrated that part of the radioactivity was accumulated at the surface of the grains and that the adhesion properties are influenced by the ion exchange capacity which, in turn, depends highly on the pH of the sediment.

The present invention uses the insight that, in view of the above observations, from the radionuclide concentration, information relevant for agricultural purposes can be obtained relating to the grain size, pore size and therewith the water retaining properties of the soil, as well as of the ion exchange capacity and the pH of the soil.

The MEDUSA system can resolve spatial contributions of the constituents ⁴⁰K, ²³²Th and ²³⁸U. Furthermore it is able to measure absolute radiation.

To verify whether the MEDUSA detector can indeed provide data which are of relevance for analysis of agricultural fields, it has been tested in an agricultural setting. These test resulted in a statistical correlation between data about radionuclides (U, K, Th, Cs) collected with the detector and various qualitative and quantitative yield parameters, notably: total yield, dry matter content, protein content, starch content, phosphor content. Application of this detector provides data on soil conditions provided valuable typology and classification of soils "on the fly". Some exemplary experimental results are set forth below.

### Example 1 - Application for field analysis potatoes

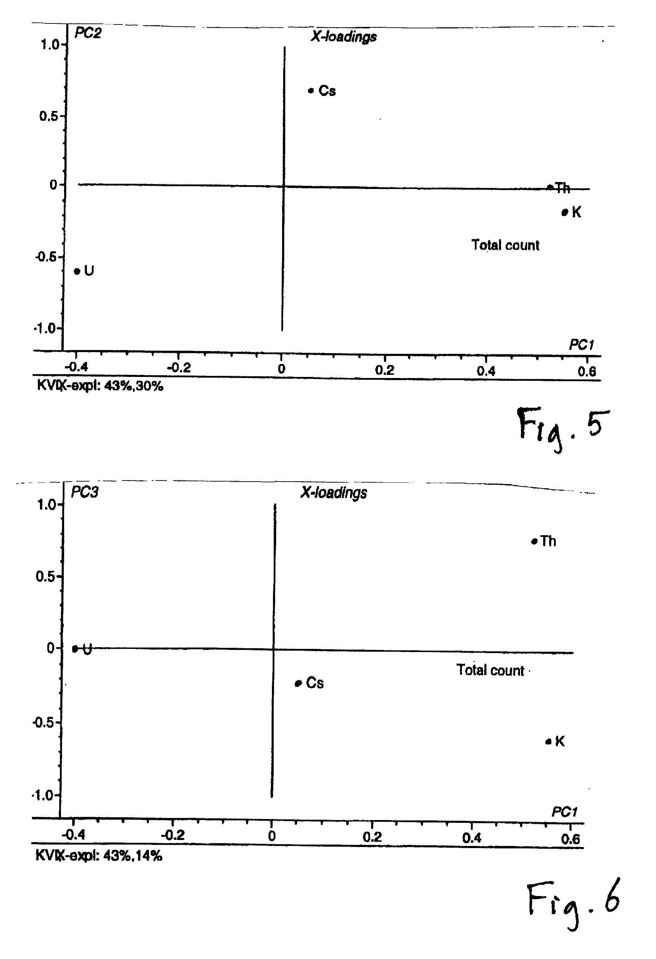

The use of Gamma detector (MEDUSA detector) in agriculture was tested at a site (of 7 hm²) in Sellingen (Groningen, the Netherlands). On this site a grid was designed of 8 x 24 experimental fields representing a wide range of soil conditions (water, organic matter, pH, N, P, K, Ca, B, Na, Zn, Mg, Fe, S, etc). On these fields, in 1997, 1998 and 1999 respectively starch potatoes, beet and starch potatoes were cultivated. A great variety of quantitative and qualitative yield parameters were measured and registered (weight, starch content, tuber quality, dry matter, crude protein, coagulating protein, % phosphorous in starch). The soil parameters were measured traditionally (laboratory tests of soil samples) as well as by means of gamma ray measurements.). The four metal elements have been checked for internal correlation. In Figs. 5 and 6, U, Cs, Th en K are tetraedrically deployed in three dimensions, which shows that they vary rather independently of each other. The main information is in PC1 and PC2. PC1 carries 43%, and is the contrast between Total count, Th and K on one hand and U on the other hand. PC2, with 30%, is the contrast between Cs and U. The third PC is dominated by the contrast between K and Th. Thus, internal correlation is practically not present, so each element contributes its own unique information. The estimated K, Cs, Th, U and Total count values of eighty different 'plots' (fields of 12 x 30 m) were used for calculations (PLS1). They have also been correlated to several other types of data such as soil composition, leaf composition during growth, crop development, potato yield, potato quality, seasonal effects, crop treatment and crop type. The data were analysed using a Principal Component Analysis. The MEDUSA data form a combination of five practically independent variables. There is a noticeable to strong relation between MEDUSA and the following types of data: soil composition, beet content, potato plant development, potato yield, potato content and potato starch quality. This is identified by using PLS1 modelling and tabulating the model correlation.

The effects of treatment of the soil with gypsum and specific fertilisation in and prior to 1997 on the MEDUSA measurement have been analysed with ANOVA and PLS1. In none of the cases a significant contribution of the treatments to the MEDUSA-measurement could be observed. This supports the idea that the measurement is soil sensitive. The small contribution of conventional fertilizer minerals (and intrinsic radioactivity) seems to be negligible.

The groups of data were:
1. MEDUSA detector data (U, K, Th, Cs )
2. Soil parameters (Organic matter, pH, elevation, N, P, K, Ca, B, Na, Zn, Mg, Fe, S)
3. Yield data (weight, starch content, tuber quality, dry matter, crude protein, coagulating protein, phosphorous content in starch)

The analysis demonstrated that various significant correlations exist:
- Between B and C an average r² of 0.45 (for crude protein of 0.63)
- Between A and B an average r² of 0.20 (for crude protein of 0.35)
- Between A and C an average r² of 0.20 (for crude protein of 0.40)

The MEDUSA detector data were especially nicely correlated (average r² > 0.4) with pH, Ca, Organic matter, Fe, Mn, Mg, Zn, and Na. There was no correlation with water and N.

### Example 2 - Application to soil composition

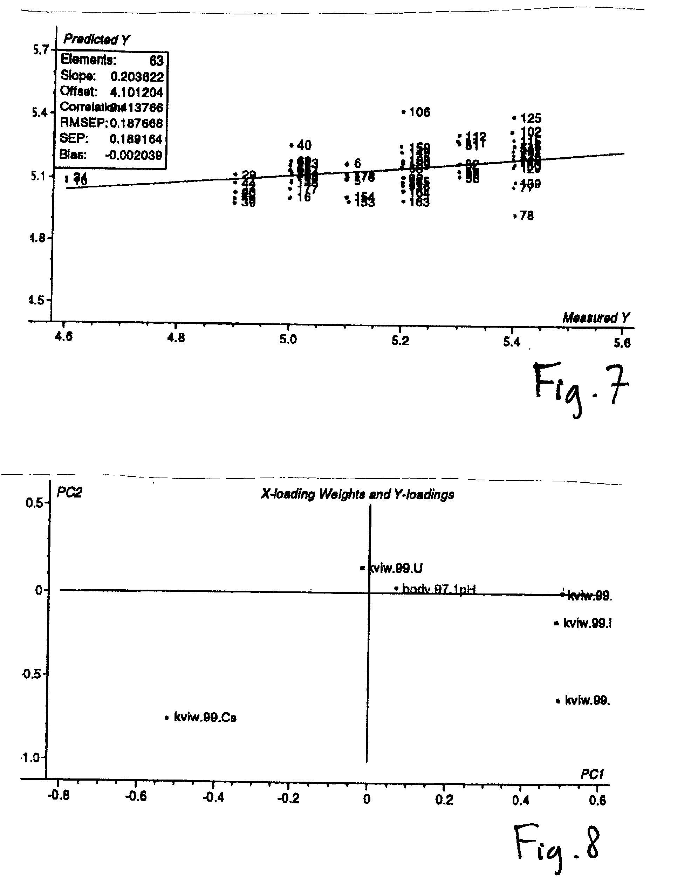

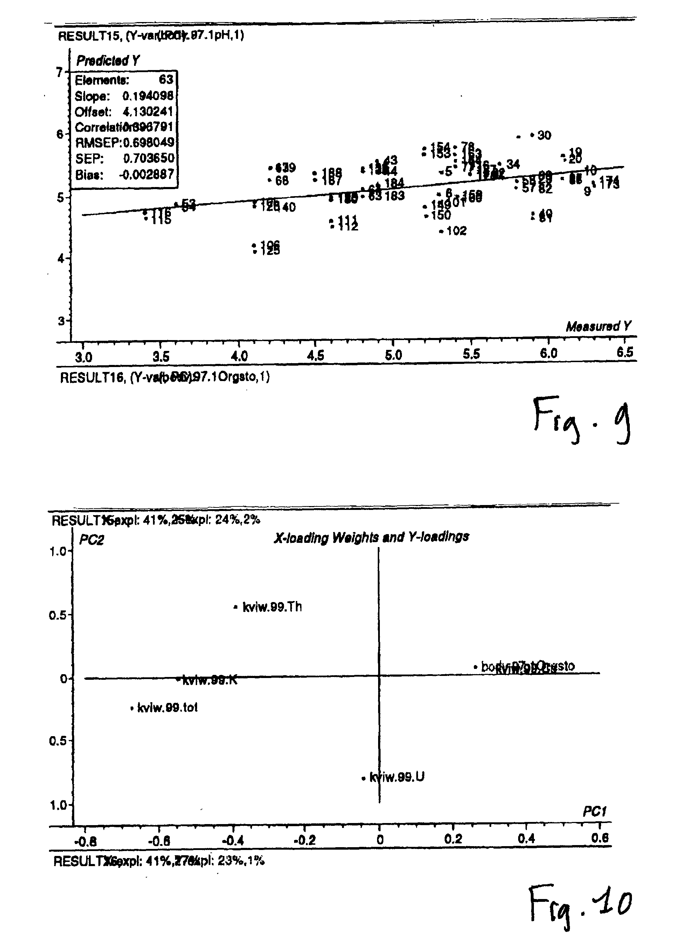

The MEDUSA sensor data were related to soil parameters, which have been gathered in spring and fall of 1997. Several parameters can be modelled. Here the most important modelling results (PLS1) are tabulated in table 1. As can be seen from Figs. 7-10, the parameters pH and organic matter are very well predictable from gamma ray data which explain 28% to 50% of the total variance. Since one can estimate that 50% of the variance is not spatially related (i.e. within plot variance), this means that there is a very good relation between MEDUSA data and soil composition.

**Table 1**

| Predicting Soil composition from MEDUSA data | | | | |
|---|---|---|---|---|
| soil property | % MEDUSA predicted variance | | | |
| parameters | spring, 0-30 cm | spring, 30-60 cm | fall, 0-30 cm | fall, 30-60 cm |
| pH | 42 | 40 | 45 | 51 |
| organic matter | 40 | 36 | 28 | 0 |
| K | 37 | 4 | 0 | 0 |
| Ca | 0 | 45 | 0 | 0 |
| Mg | 43 | 54 | 44 | 0 |
| NO3, N | 30 | 0 | 0 | 0 |
| The five MEDUSA parameters were used to predict each leave parameter individually. The predicted variance is the correlation of cross validation (which is lower than a calibration variance, but more reliable for future use) | | | | |

### Example 3 - Application to Beet

The MEDUSA detector data were related to beet parameters, which were gathered during harvesting in 1998. In table 2 the results obtained from the model are tabulated in the last column. The models have been constructed with PLS1, but PLS2 has equal or even better prediction properties. Important variables are Th and Cs, but also K, U and the Total Count have a distinct contribution. Four parameters are clearly related to the MEDUSA parameters: amino sugars content, beet head tare, potassium content and sugar content.

The amino sugar content, for example, has an overall standard deviation of 6. The pooled within-field standard deviation is 2.4 and the rest of the variance, in this case 85%, is attributed to the between-field variance. The MEDUSA parameters can predict 5% of the spatial effect upon amino sugars, which leaves 80% of the variance unpredictable. In this case, the MEDUSA data can only partially contribute to estimate the amino sugar content.

The sugar content variance is for 29% related to spatial effects. By using the MEDUSA data 25% can be predicted, leaving only 4% unpredictable. In this case the MEDUSA data can contribute significantly in predicting and consequently controlling the sugar content.

**Table 2**

| Predicting Beet yield parameters from MEDUSA data | | | | | |
|---|---|---|---|---|---|
| IRS beet yield parameter | field mean | field stdev | SEE within field stdev | R²- adj between field variance | MEDUSA predicted variance |
| amino sugar content | 17 | 6 | 2.35 | 85% | 5% |
| gross beet weight (bruto) | 17 | 3 | 2.46 | 25% | - |
| net beet weight (netto) | 13 | 2.3 | 1.9 | 32% | - |
| beet head tare (kop tarra) | 0.9 | 0.3 | 0.2 | 50% | 24% |
| K potassium content | 40 | 3.5 | 2 | 67% | 9% |
| Na sodium content | 5.2 | 1.2 | 0.6 | 76% | - |
| sugar content | 17 | 0.35 | 0.3 | 29% | 25% |
| SEE, R² are from one-way ANOVA, 64 plots (little fields) with 4 observations per plot. R² is significant in all cases. | | | | | |
| MEDUSA: the five MEDUSA parameters have been used to predict each IRS parameter individually. The predicted variance is the correlation of cross validation (which is lower than a calibration variance, but more reliable for future use) | | | | | |

### Example 4 - Leaf Content Parameters

The MEDUSA sensor data were related to leaf content parameters, obtained at four times during the growth season in 1997 and once during the 1999 season. The PLS1 models were gathered during the harvesting in 1998. In table 3 the percentage explained variance is presented. Contrary to table 2, there is no information about the within-field variance. A reasonable estimate would be that 50% of all variance is within-field variance. In that case, five parameters are clearly related to the MEDUSA parameters: NO₃, K, Ca, S and B, Mg and, to a lesser extent P.

The information about early development is very important. The MEDUSA sensor would help to predict the leaf content on June 25th for each plot on the field; the predicted nutritional deficiencies may be repaired beforehand locally by using leaf content guidelines or suitable cultivars may be selected; thus compensating early for spatial variations rendering better yield and quality.

**Table 3**

| Predicting Leaf Content Parameters from MEDUSA data | | | | | |
|---|---|---|---|---|---|
| Leaf content yield parameters | % MEDUSA predicted variance | | | | |
| | 97, 1st sampling june 25 | 97 2nd sampling | 97 3rd sampling | 97 4th sampling | 99 |
| Ca | 34 | | | | |
| S | 28 | 28 | 33 | 44 | |
| B | | | 51 | | |
| NO3 | | 46 | | 24 | 42 |
| K | 37 | 4 | | 37 | 20 |
| Mg | | | | | 8 |
| P | | | | | 6 |
| MEDUSA: the five MEDUSA parameters have been used to predict each leave parameter individually. The predicted variance is the correlation of cross validation (which is lower than a calibration variance, but more reliable for future use) | | | | | |

### Example 5 - Application to Cropscan data

The MEDUSA sensor data were related to cropscan data. The relationship between crop development and MEDUSA data is present. Although the nature of the relationship must be complex, the relationship is quite convincing. In some cases out of 44% variance related to spatial effects, 28% is predictable by MEDUSA sensor data, leaving 16% unaccounted for.

**Table 4**

| Predicting Leaf Content Parameters from MEDUSA data | | | | | |
|---|---|---|---|---|---|
| Leave content yield parameters | % MEDUSA predicted variance | | | | |
| | 1st sampling june 25 | 2nd sampling | 3rd sampling | 4th sampling | 5th sampling |
| PLS1 explained variance in 1997 | 52 | 0 | 0 | 28 | 0 |
| Total explained between field 97 | ±50 | ±50 | ±50 | ±50 | ±50 |
| PLS explained variance in 1999 | 28 | 0 | 20 | 5 | 24 |
| Total explained between field 99 | 44 | 42 | 28 | 24 | 15 |
| MEDUSA: the five MEDUSA parameters have been used to predict each leave parameter individually. The predicted variance is the correlation of cross validation (which is lower than a calibration variance, but more reliable for future use) | | | | | |

### Example 6 Application to Potato Yield and Quality

The MEDUSA sensor data were related to potato yield and quality parameters from 1997 and 1999. In table 5 the PLS1 model results are tabulated in the last column. All parameters have a between-field component, ranging from 18% for the under water weight (cf 29% with sugar content in beet (table 2)) up to 61% for Ca in the tuber. This between field component can be predicted for more than half by the MEDUSA measurements.

For example, the between-field variance of the number of rotten potatoes is 56%. The MEDUSA model already predicts 37%, the other 19% is not covered.

In most cases the MEDUSA data can contribute significantly in predicting the yield quality potential of the plots, and consequently support optimising the growth conditions.

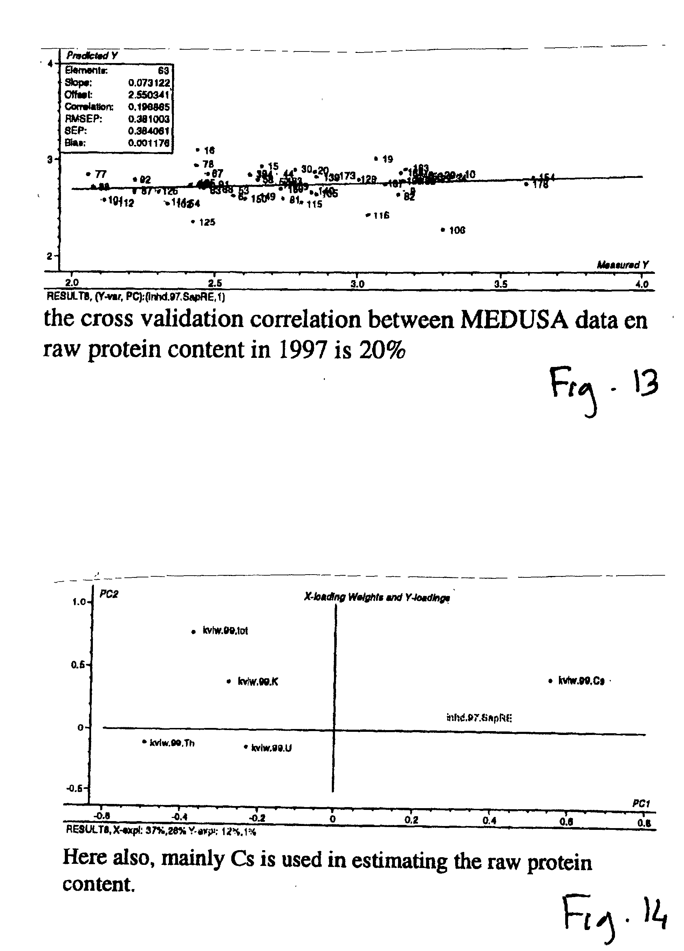

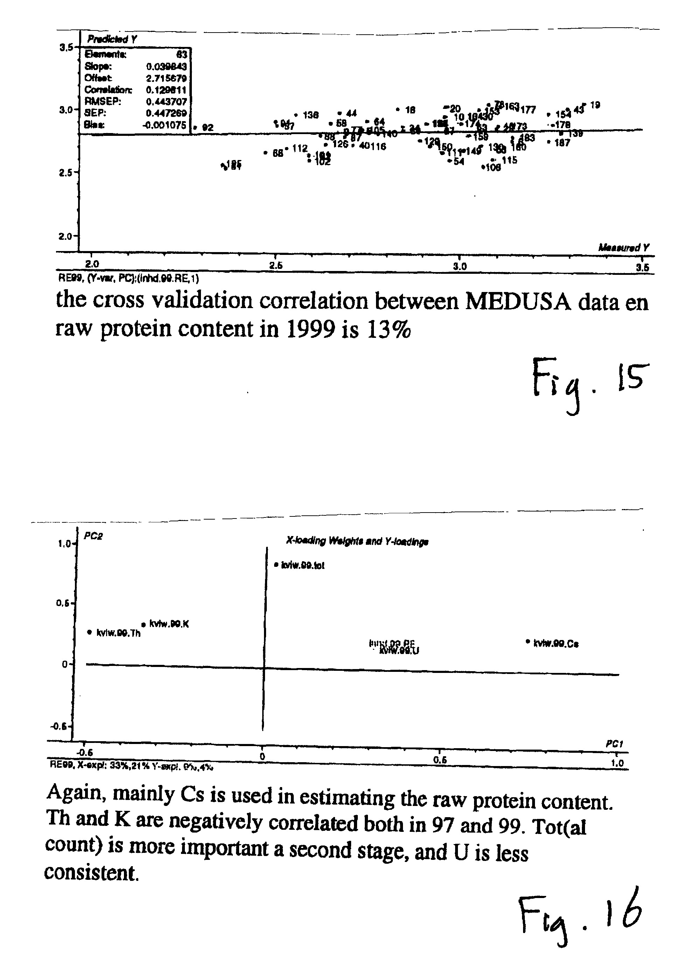

Some of the actual models are presented in Figs. 11-16.

**Table 5**

| Predicting yield and quality parameters from MEDUSA data | | | | | | |
|---|---|---|---|---|---|---|
| potato yield parameter | field mean | field stdev | SEE within field stdev | R²- adj between field variance | MEDUSA predicted variance | |
| | | | | | 1997 | 1999 |
| tuber content starch | | | na | na | 2% | 27% |
| fruit juice raw protein content | | | na | na | 20% | 22% |
| fruit juice coagulating protein | | | na | na | 8% | 20% |
| fruit juice sugars | | | na | na | 28% | 10% |
| field weight (Veldgewicht) | 55 | 8.7 | 6.9 | 37% | 55% | 0% |
| under water weight (OWG) | 490 | 22 | 20 | 18% | 0% | 44% |
| tuber content K | 497 | 58 | 50 | 20% | 22% | na |
| tuber content Mg | 24 | 4 | 2.3 | 48% | 24% | na |
| tuber content Ca | 6 | 0.8 | 0.8 | 61% | 39% | na |
| tuber content Zn | 0.43 | 0.07 | 0.05 | 50% | 31% | na |
| tuber content B | 0.1 | 0.02 | 0.02 | 20% | 9% | na |
| number of rotting potatoes | 2 | 3 | 2 | 56% | na | 37% |
| dry matter in tuber | 14 | 2 | 1.9 | 27% | na | 20% |
| dry matter in fruit | 6 | 0.33 | 024 | 51% | na | 32% |
| juice | | | | | | |
| phosphate in starch | 0.9 | 0.1 | .7 | 58% | 0% | 8% |
| na: data not available; SEE, R² are from one-way ANOVA, 64 plots (little fields) with 2 or 3 observations per plot. R² is significant in all cases. MEDUSA: the five MEDUSA parameters have been used to predict each parameter individually. The predicted variance is the correlation of cross validation (which is lower than a calibration variance, but more reliable for future use): please notice: e.g.: R² (phosphate in starch) = 58% = 37% (MEDUSA) + 21% (spatial variability, not related to MEDUSA) | | | | | | |

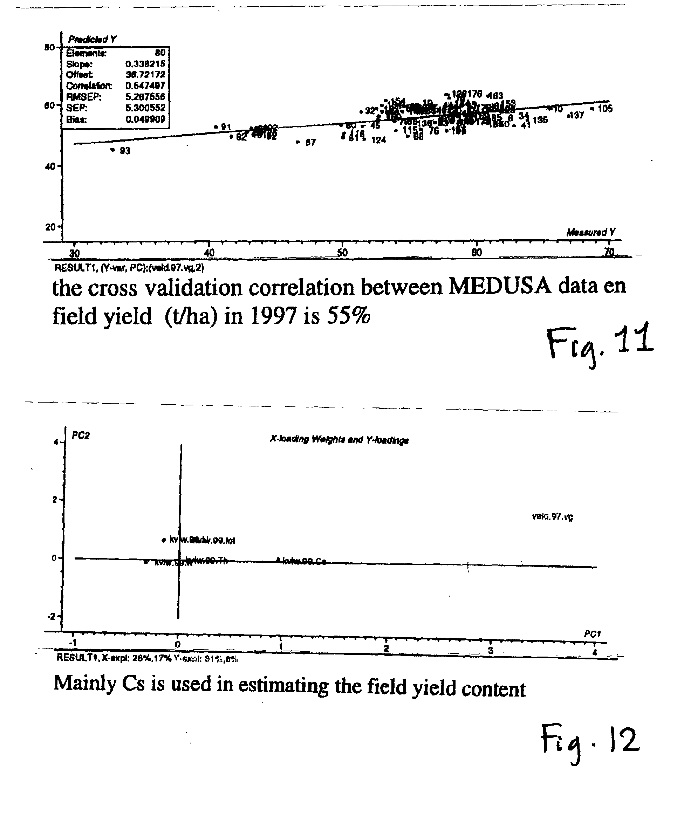

In Figs. 11, 13 and 15 models are shown and contribution of MEDUSA data for phosphate, raw protein in 1997 and raw protein in 1999 are set out in Figs. 12, 14 and 16 respectively . The models are cross validation models, which will always show a lower correlation than a calibration model, but which are more focused upon use in practice.

## Claims

1. A method for determining at least one property of a field for cultivation including measurement of gamma radiation emitted by at least one radionuclide in soil of at least a portion of that field and determining at least one property of at least said portion of said field from a result of said measurement, said at least one property determined from said measurement result including at least one property other than quantitative presence of one or more radionuclides in said at least one portion of said field.

2. A method according to claim 1, wherein said measurement result includes an intensity and energy-distribution spectrum of gamma radiation emitted by said at least one radionuclide and wherein the determination of said property includes processing of data representing said gamma radiation spectrum.

3. A method according to claim 1 or 2, wherein said measurement includes remote measuring.

4. A method according to any one of the preceding claims, further including taking a plurality of said measurements from a plurality of portions of said field and making determinations of said at least one property for each of said portions.

5. A method according to any one of the preceding claims, further including taking a plurality of said measurements from at least one of said portions of said field at different moments in time.

6. A method according to any one of the preceding claims, wherein a qualitative or quantitative yield prediction is determined from said measurement result, from data (50, 51) relating yield of crops to field properties or measurement results, and from crop data (59).

7. A method according to claim 6, wherein said data (50, 51) relating yield of crops to field properties or measurement results are at least partially obtained from at least one earlier measurement result or further determined field property and associated data representing yield quality or quantity grown in the same field after said at least one further measurement result or further field property.

8. A method according to claim 7, wherein said data (50, 51) relating yield of crops to field properties or measurement results have at least partially been obtained from growing a different crop than the crop according to the crop data to which the prediction relates.

9. A method according to any one of the claims 6-8, wherein said data (50, 51) relating yield of crops to field properties or measurement results are at least partially obtained from a general crop growth model based on yields obtained from other fields.

10. A method according to any one of the preceding claims, wherein said at least one property includes at least one soil property from a group consisting of: pH, N content, Ca content, organic matter content, pore size, pore size distribution, grain size, grain size distribution, water retaining properties, ion exchange properties and susceptibility to diseases.

11. A method according to any one of the preceding claims, including a quantitative estimation of the presence of K and at least one exogenous radionuclide, such as Cs, from said measurement result and wherein said property other than quantitative presence of one or more radionuclides in said at least one portion of said field includes the quantitative availability of K located on the outside of soil particles.

12. A method according to any one of the preceding claims, further including measurement of light received from the soil, such as measurement of color, color intensity, tint or texture pattern, of said at least one portion of said field and making said determination in accordance with a result from said measurement of said optical property.

13. A method according to any one of the preceding claims, further including sending out electromagnetic waves and measuring electromagnetic waves reflected from the soil.

14. A method according to any one of the preceding claims, further including in-situ measurement of a mechanical soil property, such as shear resistance, break-up resistance or resistance to intrusion, of said at least one portion of said field and making said determination in accordance with a result from said measurement of said mechanical property.

15. A method according to any one of the preceding claims, further including taking at least one sample from said at least one portion of said field, analyzing said at least one sample and making said determination in accordance with a result from said analysis of said sample, the number of samples taken from said field being smaller than the number of measurements of gamma radiation taken from said field.

16. A method for determining a cultivation treatment of a field for cultivation including measurement of gamma radiation emitted by radionuclide in soil of at least a portion of that field and determining said cultivation treatment from a result of said measurement.

17. A method according to claim 16, wherein said measurements are taken from a plurality of said portions of said field and wherein said at least one cultivation treatment is differentiated between at least two of said portions of said field in response to differences between said measurement results obtained from said field portions.

18. A method of cultivating a field including measurement of gamma radiation emitted by radionuclide in soil of at least a portion of that field and determining said cultivation treatment from a result of said measurement and carrying out said cultivation treatment as determined.

19. A method according to claim 18, wherein said cultivation treatment includes plowing, watering, fertilizing, application of chalk, application of agro-chemicals such as insecticides, pesticides and herbicides, planting or sowing.

20. A method according to claim 18 or 19, wherein said measurement are taken from field portions along a track over said field and wherein said treatment is carried out on field portions along said track, said treatment and said measurement progressing in unison over said field.

21. A method according to any one of the claims 18-20, wherein said cultivated crop is sugar beet, potato, wheat, corn, grass, rice, cotton, soy, cassave, a fruit such as grapes apples, pears, citrus fruit, a vegetable, such as lettuce, peas, cabbage, etc., or flowers or flower bulbs.

22. A computer program product for determining at least one property of a field for cultivation including:
instructions (54) for reading data representing results of measurement of gamma radiation emitted by at least one radionuclide in soil,
determination instructions (56) for determining at least one property from said read data, said at least one property including at least one property other than quantitative presence of one or more radionuclides in said at least one portion of said field, and
data (50) relating values of said at least one property to gamma radiation measurement results.

23. A computer program product for controlling at least one cultivation treatment of a field for cultivation including:
instructions (54) for reading data representing results of measurement of gamma radiation emitted by at least one radionuclide in soil,
determination instructions (56, 52) for determining data for controlling at least one cultivation treatment from said read data,
data (50, 51) relating values of parameters of said cultivation treatment to gamma radiation measurement results, and
output instructions (58) for outputting data for controlling said cultivation treatment.

24. A system for determining at least one property of a field for cultivation including:
a detector unit (2) and associated electronics (6, 10, 14) for detecting gamma radiation, and
a data processing system (26) including an interface (23) communicating with said detector (2); a memory (28) in which a computer program for determining at least one property of a field for cultivation is stored, said computer program including instructions (54) for reading data representing results of measurement of gamma radiation, determination instructions (56) for determining at least one property from said read data, said at least one property including at least one property other than quantitative presence of one or more radionuclides in said at least one portion of said field, and data (50) relating values of said at least one property to gamma radiation measurement results; and an interface (25) for outputting data representing said at least one determined property.

25. A system for controlling cultivation treatment of a field for cultivation including:
a detector unit (2) and associated electronics (6, 10, 14) for detecting gamma radiation, and
a data processing system (26) including an interface (23) for receiving signals representing measurement results from said detector (2); a memory (28) in which a computer program for controlling at least one cultivation treatment of a field for cultivation is stored, said computer program including instructions (54) for reading data representing results of measurement of gamma radiation inputted via said interface, determination instructions (56, 52) for determining data for controlling at least one cultivation treatment from said read data, data (50, 51) relating values of parameters of said cultivation treatment to gamma radiation measurement results, and output instructions (58) for outputting determined data for controlling said cultivation treatment; and an interface (25) for outputting data for controlling said cultivation treatment.

26. A system according to claim 24 or 25, further including a cultivation treatment apparatus (36, 38) adapted for movement over said field and carrying said detector (2).

27. A system according to claims 25 and 26, wherein said cultivation treatment apparatus (36, 38) includes a tool (38) for performing a cultivation treatment, said tool (38) communicating with said interface (25) for communicating data for controlling said cultivation treatment from said interface (25) to said tool (38) and being adapted for carrying out said treatment under control of said data processor system (26).

28. A set of data including sets of positional data (48) representing positions on or portions of a field for cultivation and sets of radiation data (49) each representing a measurement result of measuring gamma radiation, each of said measurement results being associated to one of said sets of positional data.

29. A set of data according to claim 28, wherein each of said measurement results includes at least one radionuclide concentration obtained from gamma radiation measurement.
